# EUROPEAN PATENT APPLICATION

(11) **EP 2 312 209 A2**
(43) Date of publication of application: **20.04.2011**
(21) Application number: 10011182.2
(22) Date of filing: 28.09.2010
(51) Int. Cl.: F23C 3/00, F23L 7/00

(54) **Submerged oxy-fuel burner**

(30) Priority: 19.10.2009 US 581196
(71) Applicant: Linde AG, 80331 München (DE)
(72) Inventor: Moran, Christopher, University Heights, Ohio 44118 (US)
(74) Representative: Gellner, Bernd

(57) **Abstract**

A burner (18) for melting material in a furnace (10) includes an elongated member (20) having a first end (22) with a heat source, a second end (24) with an exhaust, and a combustion chamber disposed in the elongated member interconnecting the first and second ends, a portion of the elongated member between the first and second ends in contact with the material to be melted (16). A method for melting the material is also provided.

## Description

The present inventive embodiments relate to burners used to melt for example metal or alloy compositions.

Oxy-fuel burners are typically installed in a furnace or a melting furnace in a "direct fired" manner. That is, such burners are typically disposed such that there is no physical barrier between the burner flame and/or products of burner combustion, with the material to be heated or melted.

Radiant tube burners are considered "indirect fired" burners, that is they consist of an air-fuel burner having a flame and products of combustion which are confined to an interior of the tube, prior to being exhausted. The tube is positioned in the furnace such that 1) the flame and products of combustion heat the tube from the tube interior, 2) the tube is positioned in the furnace, but not in contact with the material to be heated or melted, and 3) the tube's outer surfaces, heated from the inside, radiate heat to the furnace combustion chamber atmosphere to heat the material to be melted.

### BRIEF DESCRIPTION OF THE DRAWINGS

For a more complete understanding of the present embodiments, reference may be had to the following detailed description taken in conjunction with the drawings, of which:

FIG. 1 shows an elevation view of an oxy-fuel burner of the present embodiment;

FIG. 2 shows an elevation view of an oxy-fuel burner of another embodiment;

FIG. 3 shows an elevation view of an oxy-fuel burner of still another embodiment;

FIG. 4 shows a plan view along line IV-IV of the embodiment of FIG. 3;

FIG. 5 shows a cross-sectional view of a portion of the oxy-fuel burner of the present embodiments;

FIG. 6 shows a melter embodiment using a plurality of the oxy-fuel burners of for example FIG. 2;

FIG. 7 shows an elevation view of an oxy-fuel burner of still another embodiment;

FIG. 8 shows a plan view along line VIII-VIII of the embodiment of FIG. 7; and

FIG. 9 shows an elevation view of an oxy-fuel burner of still another embodiment.

### DETAILED DESCRIPTION OF THE INVENTION

The present embodiments provide for improved heat transfer with respect to the products to be melted.

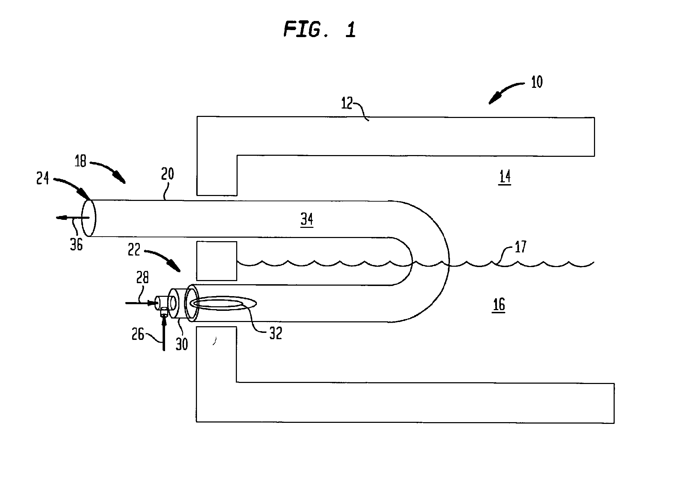

The embodiments of FIGS. 1-6 find use for example in reverberatory furnaces for aluminum and/or copper melting. The burner embodiments are disposed such that a substantial portion of such embodiments are submerged in the molten or semi-molten metal, while products of combustion of the burner embodiments are exhausted so as not to contact the melt.

Referring to FIGS. 1-5, a melting furnace shown generally at 10 includes a side wall 12 constructed to provide a combustion chamber 14 therein in which a material to be melted is disposed which will be brought to a molten consistency as shown generally at 16 as a molten or semi-molten bath or melt.

The oxy-fuel burner or burner 18 is constructed in a tubular shape having for example a circular cross section, with an inlet shown generally at 22 and an outlet or exhaust shown generally at 24. An oxygen feed 26 and a fuel feed 28 are connected to a burner portion 30 for providing a combustion flame 32 at an interior 34 of the burner tube 18. The interior 34 of the burner tube 18 is hollow, wherein the combustion flame 32 provides for the necessary heat to be transferred through the burner tube 18 to contact and heat the molten bath 16. That portion of the interior 34 exposed only to the combustion atmosphere 14, and not the melt 16, provides for heating of the combustion atmosphere 14 to further maintain the molten consistency of the bath 16 after such material has been melted. Exhaust gases from the combustion flame 32 are exhausted through the outlet 24 as indicated by arrow 36. The exhaust 36 may be sent to a scrubber or other capture device (neither of which is shown).

A material from which the tube 18 is constructed is selected from silicon carbide or a material with similar characteristics, i.e. such material being able to withstand the characteristics of the combustion atmosphere 14 and the bath 16. The inlet 22 and the outlet 24 may be arranged so that they are parallel and in a common plane.

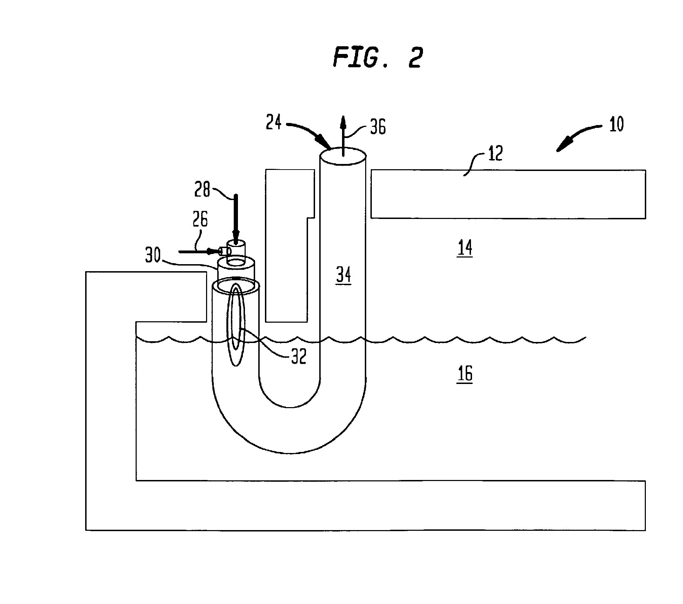

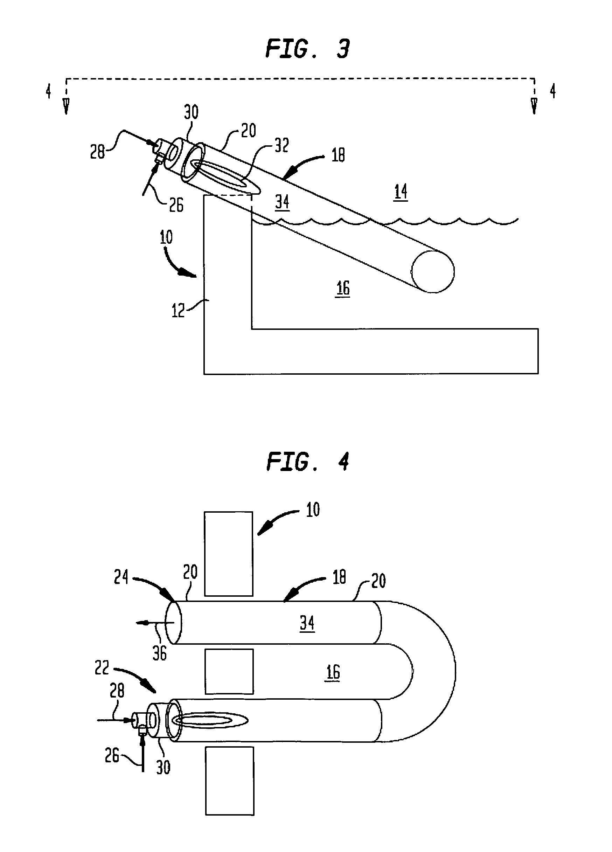

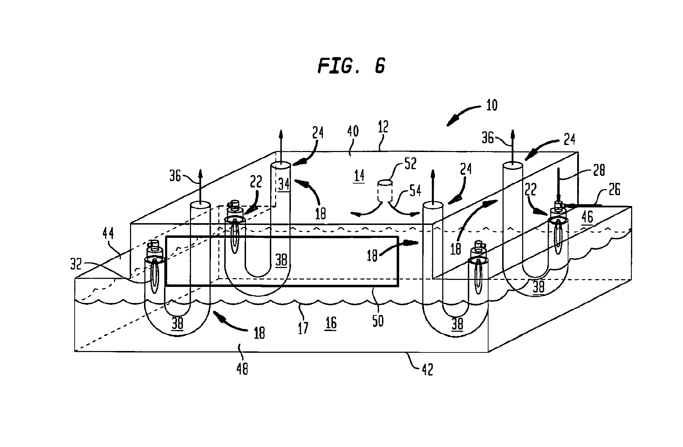

As shown in the drawings, including FIG. 6, that portion of the burner tube 18 in direct contact with the melt 16 provides the heat transfer effect for melting and maintaining the molten aspect of the bath 16. Approximately 20% to 80% of the tube 18 may be submerged in the bath 16. The burner 18 may be arranged in the furnace 10 up to 90° from the vertical or in other words up to 90% from a surface of the melt 16. Such a range of disposition is shown for example when comparing FIG. 2 and FIG. 3.

Heating of the tube interior by all the embodiments of FIGS. 1-6 is by convection and radiation.

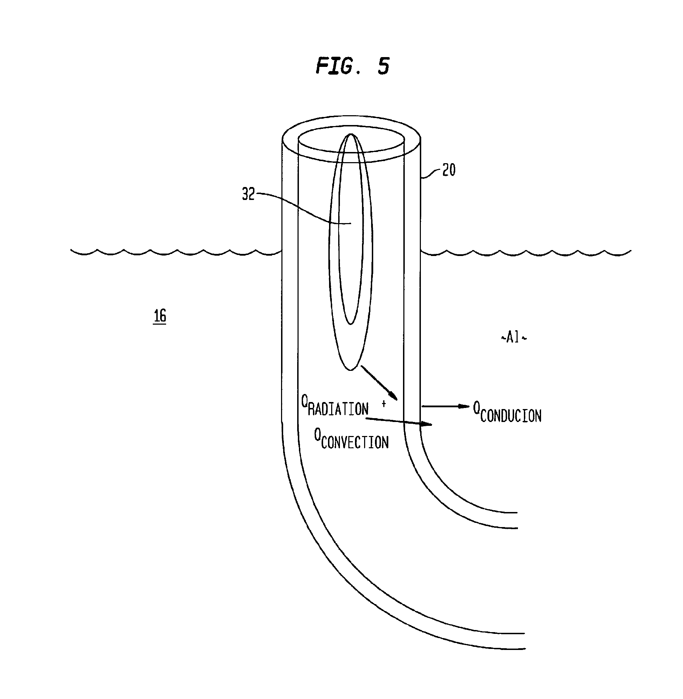

As shown in FIG. 5, for example, the quotient (Q) of radiation and the quotient of convection is added to the quotient of conduction to facilitate the melting which occurs in, for example, an aluminum (Al) bath 16. The oxy-fuel flame that is created at an interior of the burner tube 18 transfers energy to the tube by convection and radiation. In this case, the heated exhaust gases from the flame, made up of carbon dioxide and water vapor, circulate inside the tube and in turn transfer energy to the tube's inside surface. Radiation, in this case, the relatively bright oxy-fuel flame created inside the tube, transfers energy in the form of heat via wavelengths of light. Once energy (in the form of heat) is transferred to the interior surface of the tube, the energy is then transferred through the tube wall by conduction into the bath 16. Once the outside surface of the tube is heated, energy is then further transferred to the bath again by conduction. The products of combustion are exhausted from the tube without coming in contact with the product to be melted.

In FIG. 6, the burners of for example those shown in FIGS. 1 or 2, are mounted in a furnace for operation. The furnace 10 includes the side wall 12 constructed to provide the combustion chamber 14 in which is charged a metal or alloy material to be melted into a bath 16. The burners 18 will be employed to provide the melting of the metallic charge material. As shown in FIG. 6, the portion of the tube 18 shown generally at 38 lies below the surface of the molten or semi-molten bath 16.

The side wall 12 is constructed with a top 40 and a bottom 42. The top 40 and the bottom 42 are joined together with stepped side walls 44, 46. The burners 18 selected for use in the embodiment of FIG. 6 have the inlet portion 22 disposed at the corresponding stepped side walls 44,46, while the outlet portion 24 containing for the exhaust 36 is provided for at the top 40. In this manner of construction, the exhaust 36 may be released to a scrubber or other capture device (not shown) away and elevated from the inlet 22 of the tubular burner 18. Neither exhaust gases nor particulate matter are introduced into the chamber 14 or the bath 16.

The heat transfer via an oxy-fuel burner in a radiant tube submerged into the metal to be melted, is more efficient than the conventional method wherein a direct fired air-fuel burner is positioned in a furnace such that the flame is developed above the metal to be heated. The improved heat transfer provided by the burner embodiments results in more efficient and economic fuel consumption. In addition, the products of combustion at the interior 34 of the tubular burner 18 do not contact the molten metal in the bath 16, thereby reducing if not eliminating oxidation of the composition being melted in the bath 16. Further, because combustion occurs in the tube, and not in the chamber 14 (head space) above the bath 16, this translates into being able to use a smaller melter or furnace 10, thereby reducing the initial capital expense and ongoing operating expense. In addition, because the combustion flame 32 is not provided in the combustion chamber 14 of the furnace, the combustion chamber 14 or head space can be at a reduced or minimum height which correspondingly translates into reduced air infiltration to the furnace and reduced oxidation of, for example, aluminum if such metal is being processed in the furnace.

Since the products of combustion from the oxy-fuel flame are not in contact with the material being melted, an inert gas can be provided through injection port 52 into the chamber 14 above the molten metal (the gas being confined to the chamber 14 by the walls of the furnace), as shown by arrows 54, to protect the material from oxidation caused by ambient air possibly leaking into the furnace through a furnace door 50 or other openings in the furnace structure. The inerting gas 54 can be selected from nitrogen, argon or similar inert gas. The door 50 can include a transparent portion of heat resistant glass for observing the combustion chamber, material being melted, and the furnace operation. Injecting the inert gas into the chamber 14 would not be practical or effective in a conventional furnace because the injected nitrogen would mix with the products of combustion from the flame, i.e., CO₂, H₂O and N₂ in some cases.

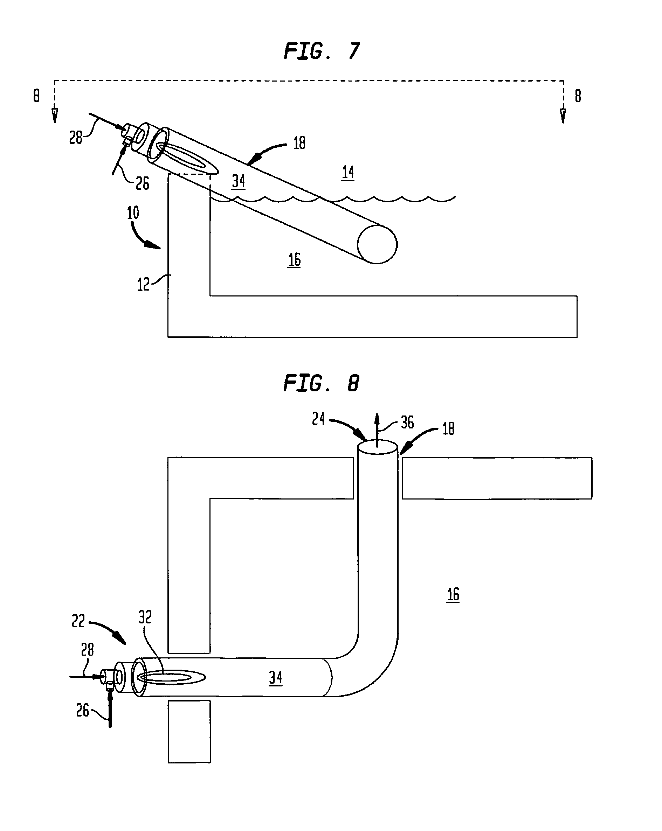

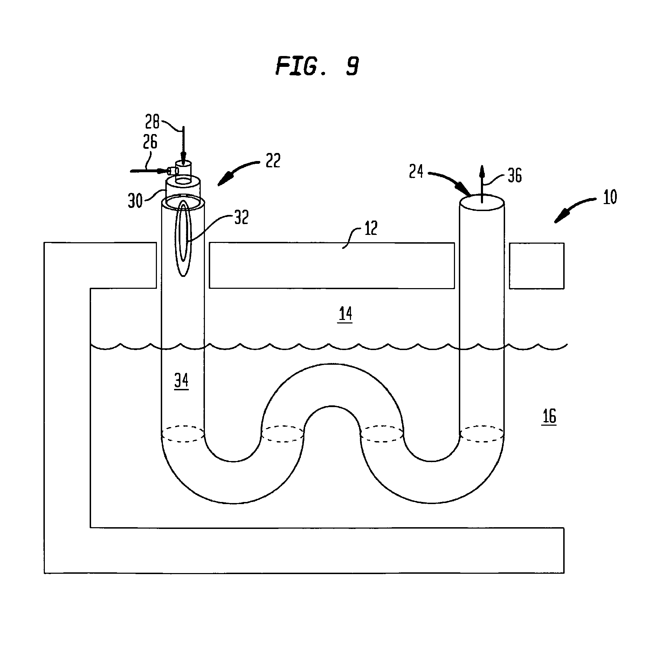

In FIG. 7 and FIG. 8, the tubular burner 18 is constructed in an "L" shape. The embodiment of FIG. 9 shows the tubular burner 18 constructed in a "W" shape. In both the embodiments of FIGS. 7-9, a portion of a respective one of the tubular burners 18 is disposed to contact the particulate material to be melted, or submerged in the bath 16 for heating thereof, as may be done with other of the embodiments herein. The tubular member 18 can be formed in a myriad of different shapes, a portion of which is submerged into the bath 16.

In addition, the embodiments of FIGS. 7-9 can be arranged individually or in combination with each other in a furnace 10 as shown in FIG. 6.

The burner 18 is fabricated from material that can withstand thermal and mechanical shock, chemical reaction (fluxing) and be able to absorb and transfer heat readily and efficiently. The material from which a sidewall of the burner 18 is fabricated will not deform or be structurally compromised when in contact with the molten material in the bath 16.

A method is also provided from the embodiments of FIGS. 1-9 for melting particulate material in a furnace, the method including providing a combustion flame in a hollow elongated member, heating the elongated member with the combustion flame, disposing at least a portion of the elongated member in the particulate material, and heating the particulate material by conduction of the heat from the elongated member for melting said particulate material.

Reduced specific energy consumption will also be realized by the embodiments of FIGS. 1-9, in view of the reduction of energy consumed per unit weight of metal, such as aluminum, melted. Reduced melting times result in increased productivity and lower production costs.

There is also realized reduced oxidized material ('dross' is the term used within the aluminum industry, the copper industry uses 'slag', in both cases it's metal originally charged in its pure state, but then oxidized in the melting process) formation as a result of no contact between the exhaust 36 and the product being melted in the bath 16.

The present embodiments can be used with copper, tin and magnesium furnaces or melters.

It will be understood that the embodiments described herein are merely exemplary, and that a person skilled in the art may make many variations and modifications without departing from the spirit and scope of the invention. All such variations and modifications are intended to be included within the scope of the invention as described and claimed herein. It should be understood that embodiments described above are not only in the alternative, but may also be combined.

## Claims

1. A burner for melting material in a furnace, comprising an elongated member having a first end with a heat source, a second end with an exhaust disposed remote from the material, and a combustion chamber disposed in the elongated member interconnecting the first and second ends, a portion of the elongated member between the first and second ends in contact with the material to heat and melt said material.

2. The burner of claim 1, wherein the heat source comprises a combustion flame.

3. The burner according to claim 1 or 2, wherein at least 20% of the elongated member is in contact with the material.

4. The burner according to any of claims 1 to 3, wherein the second end is at a higher elevation than the first end.

5. The burner according to any of claims 1 to 4, wherein the first and second ends are parallel with each other.

6. The burner according to any of claims 1 to 5, wherein the first and second ends are in a common plane.

7. The burner according to any of claims 1 to 6, wherein the elongated member comprises a sidewall composition resistant to deformation when in contact with the melted material.

8. The burner according to any of claims 1 to 7, wherein the elongated member may be arranged up to 90° from a surface of the material to be melted.

9. The burner according to any of claims 1 to 8, wherein the portion of the elongated member in contact with the material is arranged in a W-shape.

10. A furnace for melting particulate material, comprising
- a housing;
- a combustion chamber in the housing;
- a bath of material in the combustion chamber;
- a burner according to any of claims 1 to 9 for melting the material in the combustion chamber.

11. The furnace of claim 10, wherein the heat source comprises a combustion flame.

12. The furnace according to claim 10 or 11, further comprising a port disposed in the housing through which gas is introduced into the combustion chamber to inert an atmosphere of the combustion chamber.

13. The furnace of claim 12, wherein the gas is selected from nitrogen and argon.

14. A method of melting particulate material in a furnace, comprising providing a combustion flame at a first end of a hollow elongated member, heating the elongated member with the combustion flame, disposing at least a portion of the elongated member in the particulate material, heating the particulate material by conduction of the heat from the elongated member for melting said particulate material, and exhausting combustion gases from a second end of the elongated member disposed at a location remote from the material.

15. The method of claim 14, wherein the exhausting of the hollow elongated member is at an elevation higher than the combustion flame.

16. The method according to claim 14 or 15, further comprising introducing a gas into an atmosphere proximate the particulate material, and inerting the atmosphere with the gas.

17. The method of claim 16, wherein the gas is selected from nitrogen and argon.
